# EUROPÄISCHE PATENTSCHRIFT

(11) **EP 1 260 751 B1**
(45) Veröffentlichungstag und Bekanntmachung des Hinweises auf die Patenterteilung: **09.03.2005**
(21) Anmeldenummer: 02009630.1
(22) Anmeldetag: 27.04.2002
(51) Int. Cl.: F16L 21/06

(54) **Rohrschelle, insbesondere Rohrkupplung**
Pipe clamp, in particular pipe coupling
Collier de serrage, notamment raccord de tuyaux

(30) Priorität: 17.05.2001 DE 10123924
(43) Veröffentlichungstag der Anmeldung: 27.11.2002
(73) Patentinhaber: Rasmussen GmbH, 63477 Maintal (DE)
(72) Erfinder: Wachter, Gerhard, 63654 Büdingen (DE); Barbett, Wolfgang, 46414 Rhede (DE); Krämer, Markus, 63533 Mainhausen (DE); Heise, Rainer, 37308 Siemerode (DE); Krüger, Manfred, 63654 Büdingen (DE)
(74) Vertreter: Knoblauch, Andreas, Dr.-Ing.

(56) Entgegenhaltungen:
- EP-A- 0 940 618
- EP-A- 1 245 889
- DE-A- 3 632 127
- DE-C- 3 710 852
- US-A- 3 116 078

## Beschreibung

Die Erfindung betrifft eine Rohrschelle, insbesondere Rohrkupplung, mit einem spannbaren Schellenmantel und mindestens einem radial innerhalb des Schellenmantels angeordneten, zur axialen Mitte des Schellenmantels hin geneigten Krallenband, das zwischen sich und der radial inneren Seite des Schellenbandes einen spitzen Winkel begrenzt, an einer Längskante radial nach innen ragende, axial relativ zum Schellenmantel geneigte Zähne aufweist und nur mit der anderen Längskante in Radialrichtung und in Axialrichtung am Schellenmantel direkt abgestützt ist.

Eine derartige Rohrschelle, die zum Beispiel aus Dokument EP-A-0 340 618 bekannt ist, dient entweder zum koaxialen Verbinden von Enden glatter Endabschnitte von Rohren und/oder als Halterungsschelle mit einem zusätzlichen Stütz- oder Befestigungsteil zum Befestigen an Gebäudeteilen.

Wenn die Rohrschelle als Rohrkupplung verwendet wird, dann weist sie an ihren beiden axialen Enden jeweils eine Krallenbandanordnung auf, wobei jede Krallenbandanordnung aus zwei oder mehr Krallenbändern gebildet ist. Die Zähne der Krallenbänder an den axialen Enden des Schellenmantels weisen aufeinander zu. Dies hat beim Spannen des Schellenmantels den Effekt, daß man die Rohrenden nicht ohne weiteres wieder auseinanderziehen kann.

Allerdings ist die Montage einer derartigen Rohrschelle relativ aufwendig. Das Spannen des Schellenmantels muß mit einer relativ hohen Genauigkeit erfolgen. In der Regel ist hierfür der Einsatz eines Drehmomentschlüssels erforderlich.

Der Erfindung liegt die Aufgabe zugrunde, die Montage zu vereinfachen.

Diese Aufgabe wird bei einer Rohrschelle der eingangs genannten Art dadurch gelöst, daß der spitze Winkel frei von einer Verbiegung des Krallenbandes zur radial inneren Seite des Schellenmantels entgegenwirkenden Mitteln ist.

Mit anderen Worten, das Krallenband liegt nur mit einer Längskante am Schellenmantel an und ragt im übrigen frei zur Mittelachse des Schellenmantels. Auf der den spitzen Winkel zwischen Krallenband und Schellenmantel begrenzenden Rückseite des Krallenbandes befindet sich kein Element, das als Widerlager für das Krallenband dienen könnte. Wenn der Schellenmantel gespannt wird, dann können die Zähne des Krallenbandes radial nach außen gedrückt werden. Da das Krallenband in gewisser Hinsicht elastisch nachgiebig ist, ergibt sich dabei eine gewisse Federwirkung. Die Zähne und die Rohrenden gehen also eine griffigere Verbindung ein, je stärker der Schellenmantel gespannt wird. Darüber hinaus stellen die geneigten Zähne sicher, daß die beiden Rohrenden mit zunehmender Spannung des Schellenmantels und damit einhergehender Durchmesserverringerung des Schellenmantels aufeinander zu bewegt werden und sich mit einer vorbestimmten Kraft aneinander annähern können. Gleichzeitig ist auch eine Anpassung an unterschiedliche Durchmesser der beiden Rohrenden möglich. Das Krallenband an dem Rohrende mit dem größeren Durchmesser wird im Anlagewinkel etwas stärker angepaßt. Da das Krallenband aber auf seiner Rückseite ohne Abstützung ist, kann es ungehindert radial nach außen gedrückt bzw. gebogen werden. Hierbei erhöht sich allenfalls die Anlagekraft der Zähne an das Rohr, es tritt jedoch keine Überbeanspruchung von irgendwelchen Abstützmitteln auf.

Vorzugsweise liegt das Krallenband im Bereich der anderen Längskante am Schellenmantel an, wobei der Schellenmantel und das Krallenband eine aneinander angepaßte Anlageform aufweisen, die Druckkräfte in axialer und radialer Richtung aufnimmt. Es ist also über den größten Teil des Umfangs des Schellenmantels überhaupt keine dauerhafte Befestigung zwischen dem Schellenmantel und dem Krallenband erforderlich. Es reicht aus, wenn man am Schellenmantel und/oder am Krallenband Ausformungen vorsieht, die sich gegenseitig so abstützen, daß das Krallenband gegenüber dem Schellenmantel in einer axialen Richtung verlagert werden kann. Eine Verlagerung in radialer Richtung (jeweils bezogen auf einen ringförmigen Schellenmantel) ist ohnehin nicht möglich, weil eine derartige Radialbewegung durch den Schellenmantel unterbunden wird.

Hierbei ist besonders bevorzugt, daß der Schellenmantel einen radial nach innen umgebogenen Randabschnitt aufweist, der einen Innenwinkel bildet, in dem die andere Längskante des Krallenbandes angeordnet ist. Man biegt also den Schellenmantel an seinen axialen Enden um, so daß der Schellenmantel im Querschnitt ein radial nach innen offenes U- oder C-Profil bildet. Wenn man nun das Krallenband in die Ecke des Profils einlegt, wobei das Krallenband mit dem Schellenmantel einen Winkel im Bereich von 15° - 75° einschließt, dann bietet der Randabschnitt eine ausreichende Abstützung gegenüber einer Bewegung des Krallenbandes relativ zum Schellenmantel axial nach außen. Der Schellenmantel an sich liefert ein ausreichendes Widerlager gegen eine Bewegung radial nach außen. Wenn die Spannung im Schellenmantel steigt, weil der Schellenmantel etwas enger um das Rohr gelegt wird, dann kann das Krallenband nicht ausweichen, sondern allenfalls in Richtung auf den Schellenmantel ausfedern, wobei sich gegebenenfalls der Winkel zwischen dem Krallenband und dem Schellenmantel ändert, ansonsten aber keine Änderungen der Geometrie zu beobachten sind.

Vorzugsweise ist das Krallenband an seinen Enden mit dem Schellenmantel verbunden. Diese Ausbildung ist insbesondere dann von Vorteil, wenn man in Umfangsrichtung der Rohrschelle zwei oder mehr Krallenbänder vorsieht. Wenn das Krallenband als Ring, gegebenenfalls auch als einmal unterbrochener Ring ausgebildet ist, dann reicht es in vielen Fällen aus, diesen Ring einfach in den Schellenmantel einzulegen. Wenn man hingegen mehrere Ringabschnitte verwendet, dann verhindert die Befestigung an den Enden des Krallenbandes, daß das Krallenband verloren geht. Darüber hinaus wird durch die Fixierung des Krallenbandes am Schellenmantel erreicht, daß sich die Spannkräfte mit ausreichender Genauigkeit dort ausbilden können, wo sie auch wirken sollen.

Vorzugsweise ist das Krallenband mit dem Schellenmantel formschlüssig verbunden. Eine formschlüssige Verbindung ist einfach herzustellen. Sie benötigt keine aufwendigen Zusatzmaßnahmen, wie etwa Schweißen, Löten oder Kleben. Es ist lediglich erforderlich, gewisse Bereiche des Schellenmantels und/oder des Krallenbandes umzuformen, so daß die entsprechende Verbindungsgeometrie hergestellt werden kann. Die formschlüssige Verbindung beschränkt sich auf die Enden des Krallenbandes.

Hierbei ist besonders bevorzugt, daß der Schellenmantel und das Krallenband durch Bügel miteinander verbunden sind, die einstückig mit dem Schellenmantel und formschlüssig mit dem Krallenband oder einstückig mit dem Krallenband und formschlüssig mit dem Schellenmantel oder formschlüssig mit dem Krallenband und dem Schellenmantel verbunden sind. Eine derartige Ausbildung ist relativ einfach herzustellen. Es reicht aus, bestimmte Teile zu stanzen und zu biegen. Dies kann bei den Stanz- und Biegevorgängen erfolgen, die zum Herstellen der Rohrschelle ohnehin erforderlich sind.

Vorzugsweise ist an jedem Krallenband ein Bügel mindestens an zwei Seiten des Bügels mit dem Schellenmantel verbunden und bildet eine Tasche, in die das Krallenband eingesteckt ist. Eine derartige Ausbildung des Bügels erhöht die Festigkeit und die Stabilität der Verbindung des Bügels mit dem zugeordneten Teil des Schellenmantels oder Krallenbandes. Zum Befestigen des Krallenbandes am Schellenmantel ist zwar eine Bewegung des Krallenbandes gegenüber dem Schellenband erforderlich. Diese läßt sich jedoch in den meisten Fällen realisieren.

Hierbei ist es von Vorteil, wenn der Bügel an seinem einen Ende befestigt und am anderen Ende aufbiegbar ist. Man beschränkt dann den Biegevorgang beim Befestigen des Krallenbandes am Schellenmantel auf den Bügel, muß also weder den Schellenmantel noch das Krallenband verformen.

Vorzugsweise ist das eine Ende des Bügels am Randabschnitt befestigt. Damit kann der Bügel bereits in einer gewissen radialen Entfernung vom Schellenmantel anfangen, d. h. man kann sich unter Umständen den einen oder anderen Biegevorgang ersparen. Insbesondere dann, wenn der Bügel mit beiden Enden am Schellenmantel befestigt ist, ist keine Verlängerung des Bügels an sich erforderlich.

Vorzugsweise weist das Krallenband an mindestens einem Ende einen Befestigungsabschnitt auf, der gegenüber dem Rest des Krallenbandes verdreht ist. Wie bereits erwähnt, schließt das Krallenband mit dem Schellenmantel einen spitzen Winkel ein. Diesen Winkel würde auch der Befestigungsabschnitt einschließen, so daß hier eine entsprechend große radiale Erstreckung des Bügels erforderlich wäre. Wenn man-hingegen den Befestigungsabschnitt gegenüber dem Rest des Krallenbandes etwas verdreht, dann kann man die radiale Erstreckung des Bügels verringern.

Hierbei ist besonders bevorzugt, daß der Befestigungsabschnitt zumindest annähernd parallel zum Schellenmantel angeordnet ist. Der Bügel kann dann seine geringste radiale Erstreckung aufweisen. Gleichzeitig ist dann, wenn der Befestigungsabschnitt annähernd plan gegen den Schellenmantel gedrückt wird, eine verbesserte Halterung des Krallenbandes am Schellenmantel gegeben.

Vorzugsweise weist der Randabschnitt in Umfangsrichtung mindestens eine Unterbrechung auf. Damit kann man ein "Scharnier" im Schellenmantel ausbilden. Dies erleichtert zum einen die Herstellung der Rohrschelle, weil man bei einem "aufgeklappten" Schellenmantel einen besseren Zugriff auf das Innere des Schellenmantels hat. Dies ist insbesondere beim Einlegen der Krallenbänder von Vorteil. Zum anderen ist die Montage oder Demontage der Rohrschelle durch den Monteur leichter, da er den Schellenmantel aufbiegen kann, beispielsweise um die Rohrschelle um ein Rohr oder um Rohrenden herum zu legen oder sie zu entfernen.

Vorzugsweise ist die Unterbrechung dadurch gebildet, daß der Randabschnitt über eine vorbestimmte Umfangslänge axial nach außen gebogen ist. Damit wird beim Spannen vermieden, daß die Kraftlinien, die sich im Schellenmantel ausbilden, unterbrochen werden. Dies verbessert die Belastbarkeit der Rohrschelle.

Auch ist von Vorteil, wenn die Unterbrechung in Umfangsrichtung außerhalb eines Krallenbandes angeordnet ist. Dabei wird die Funktion des Scharnieres nicht durch ein Krallenband gestört. Die Montage des Krallenbandes im Schellenmantel ist einfacher.

Sodann kann dafür gesorgt sein, daß die Umfangslänge des Schellenmantels so gewählt ist, daß seine Umfangsenden aneinander anliegen, wenn die Schelle soweit gespannt ist, daß der Durchmesser des Umkreises der freien Zahnenden kleiner als der, unter Berücksichtigung eines Rohrdurchmesser-Toleranzbereiches, kleinste Nenn-Außendurchmesser der oder des in der Schelle aufzunehmenden Rohre(s) ist.

Dadurch wird eine Überbeanspruchung von Teilen vermieden, so daß der Schellenmantel sozusagen bis zum gegenseitigen Anschlag seiner Enden (Spannbacken) gespannt werden kann. Die Montage kann also auf Sicht erfolgen, ohne daß irgendwelche Meßinstrumente erforderlich wären, also auch kein Drehmomentschlüssel. Dennoch bleibt das Krallenband elastisch biegsam vorgespannt.

Die Erfindung wird im folgenden anhand eines bevorzugten Ausführungsbeispiels in Verbindung mit der Zeichnung näher beschrieben. Hierin zeigen:
- Fig. 1: eine perspektivische Darstellung einer Rohrschelle, die als Rohrkupplung ausgebildet ist,
- Fig. 2: eine Seitenansicht, teilweise im Aufriß,
- Fig. 3: einen Schnitt III-III nach Fig. 2,
- Fig. 4: einen Schnitt IV-IV nach Fig. 3,
- Fig. 5: eine Vergrößerung eines Details aus Fig. 4,
- Fig. 6: einen Schnitt VI-VI nach Fig. 3,
- Fig. 7: eine Vergrößerung eines Ausschnitts aus Fig. 6,
- Fig. 8: eine Vergrößerung eines Ausschnitts aus Fig. 2 und
- Fig. 9: eine Draufsicht auf eine Unterbrechung eines Randabschnitts.

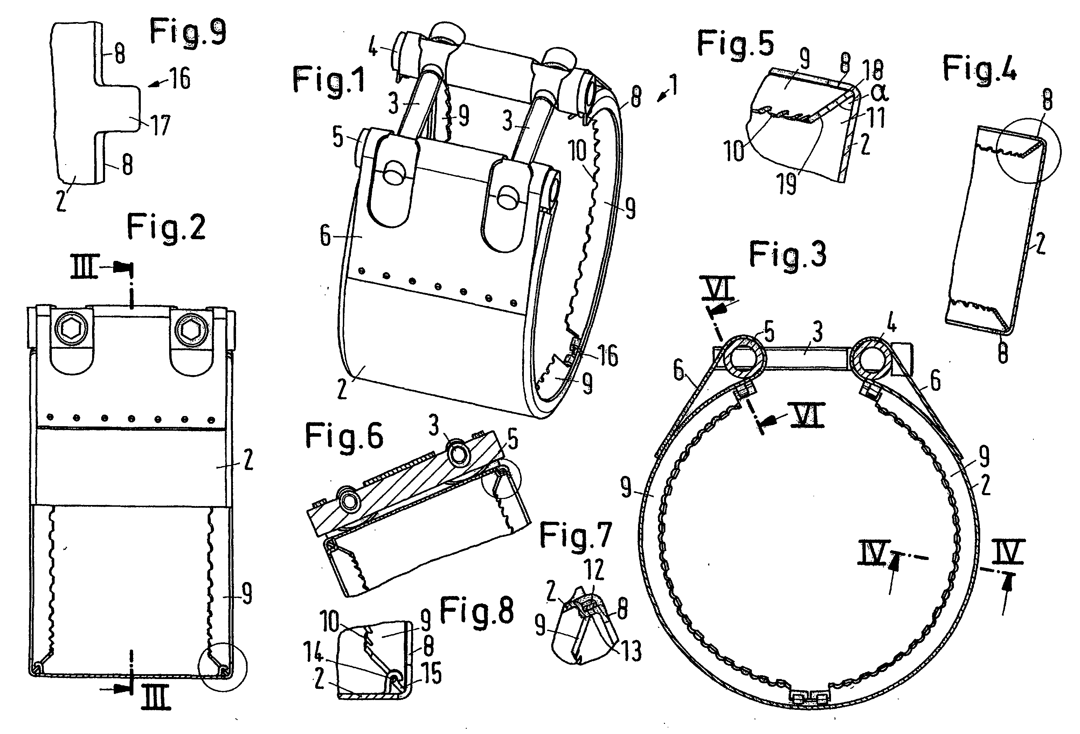

Fig. 1 zeigt eine als Rohrkupplung ausgebildete Rohrschelle 1, die zum Verbinden von glatten, d. h. unprofilierten Endabschnitten zweier Rohre (nicht dargestellt) dient. Die Rohrschelle 1 weist einen spannbaren Schellenmantel 2 auf, der annähernd ringförmig gebogen ist. Die beiden Enden des Schellenmantels 2 werden mit Hilfe von Spannschrauben 3 gespannt, wobei beim Festziehen der Spannschrauben 3 die Enden des Schellenmantels 2 aufeinander zu bewegt werden, wodurch sich der lichte Durchmesser des Bereichs, der vom Schellenmantel 2 umgeben ist, verringert. Die Spannschrauben 3 sind durch eine Gelenkhülse 4 hindurch geführt und mit einer Gelenkhülse 5 verschraubt. Die Gelenkhülsen 4, 5 sind in Schlaufen 6 angeordnet, die durch Umbiegen von Endabschnitten des Schellenmantels 2 und thermisches Fügen, z.B. eine Buckel- oder Punktschweißverbindung, mit dem Hauptteil des Schellenmantels gebildet sind und zusammen mit den Gelenkhülsen 4, 5 oder Gelenkbolzen Spannbacken der Rohrschelle bilden.

Der Schellenmantel 2 weist an seinen beiden axialen Enden Randabschnitte 8 auf, die radial nach innen umgebogen sind. Dies ist insbesondere aus den Figuren 4 und 5 zu erkennen. Der Schellenmantel 2 bildet daher im Schnitt ein radial nach innen offenes U- oder C-förmiges Profil. In den Winkeln, die zwischen dem Schellenmantel 2 und jeweils einem Randabschnitt 8 gebildet sind, ist ein Krallenband 9 eingelegt. Das Krallenband 9 weist Zähne 10 auf, die, bezogen auf den Schellenmantel 2, radial einwärts gerichtet sind. Dabei ist das Krallenband 9 so gebogen, daß die Zähne 10 auch axial einwärts gerichtet sind.

An jedem axialen Ende des Schellenmantels 2 sind zwei Krallenbänder 9 angeordnet, was insbesondere in Fig. 3 zu erkennen ist. Die Schellenbänder 9 sind auf ihrer gesamten Länge frei von einer Unterstützung, d. h. zwischen den Enden eines jeden Krallenbandes 9 ergibt sich auf der gesamten Länge die in Fig. 5 dargestellte Situation, daß in einem Winkelbereich 11 mit einem Winkel α zwischen dem Schellenmantel 2 und dem Krallenband 9 im Bereich von 15° - 75° keine Abstützungsmittel oder -elemente angeordnet sind. Die Rückseite 19 des Krallenbandes 9 ist frei von jeglicher Abstützung. Das Krallenband 9 läßt sich also unter elastischer Verformung radial an den Schellenmantel 2 heranbiegen. Ein Widerstand wird dabei hauptsächlich durch das Krallenband 9 selbst aufgebracht, das bei einer entsprechenden Kraftbeaufschlagung beim Spannen der Rohrschelle verformt werden muß, damit sich die Zähne 10 radial weiter nach außen bewegen können. Aus diesem Grunde reicht es theoretisch aus, das Krallenband 9 an jedem axialen Ende des Schellenmantels 2 einstückig auszubilden und es einfach in den Winkelbereich 11 zwischen dem Schellenmantel 2 und dem Randabschnitt 8 einzulegen. Aus praktischen Erwägungen ist es aber vorteilhaft, das Krallenband 9 mehrteilig auszubilden und es an seinen Ende formschlüssig mit dem Schellenmantel 2 zu verbinden. Eine derartige formschlüssige Verbindung ist in den Figuren 7 und 8 dargestellt.

Das Krallenband 9 weist daher einen Befestigungsabschnitt 12 auf, der gegenüber dem Rest des Krallenbandes 9 so verbogen ist, daß der Befestigungsabschnitt 12 etwa parallel zum Schellenmantel 2 liegt.

Der Schellenmantel 2 weist einen Bügel 13 auf, der dadurch gebildet ist, daß der Schellenmantel 2 in Umfangsrichtung vor und hinter dem Bügel 13 zwei Schnitte enthält, die in Axialrichtung verlaufen. Der Bereich zwischen den beiden Schnitten (nicht näher dargestellt) bildet dann den Bügel, der, um die in Fig. 7 dargestellte Form zu erhalten, radial nach innen gedrückt wird. Es ist zu erkennen, daß der Bügel 13 sowohl am Schellenmantel 2 als auch am Randabschnitt 8 befestigt ist. Die Verbindung zwischen dem Schellenmantel 2 bzw. dem Randabschnitt 8 und dem Bügel 13 ist einstückig, und zwar an beiden Enden des Bügels 13. Zwischen dem Bügel 13 und dem Schellenband 2 ist damit sozusagen eine Tasche gebildet, in die der Befestigungsabschnitt 12 des Krallenbandes 9 eingesteckt werden kann. Der Bügel 13 kann auch an drei Seiten mit dem Schellenmantel 2 und ggf. dem Randabschnitt 8 verbunden sein, wobei die Tasche zum Einstecken des Krallenbandes 9 nur einseitig offen ist.

Das andere Ende des Krallenbandes 9 ist in ähnlicher Weise befestigt: Aus dem Schellenmantel 2 ist ein Bügel 14 herausgebogen, der durch einen U-förmigen Schnitt in den Schellenmantel 2 gebildet ist. Die dabei entstehende Lasche kann dann im wesentlichen senkrecht relativ zum Schellenmantel radial einwärts und am Ende noch einmal U-förmig radial nach außen gebogen werden, so daß der andere Endabschnitt 15 des Krallenbandes 9 vom Bügel 14 umschlossen werden kann. Dadurch wird eine formschlüssige Verbindung zwischen dem Schellenmantel 2 und dem Krallenband 9 gebildet, die ohne zusätzliche Befestigungsteile oder -verfahren auskommt. Natürlich kann auch der Befestigungsabschnitt 15 gegenüber dem Rest des Krallenbandes 9 verbogen oder verbunden sein. Die unterschiedliche Darstellung in den Figuren 7 und 8 wurde gewählt, um beide Möglichkeiten zu demonstrieren.

Wie aus Fig. 1 hervorgeht, weist der Randabschnitt 8 an jedem Umfangsende eine Unterbrechung 16 auf. Diese Unterbrechung 16 ist in Fig. 9 vergrößert dargestellt. Es ist zu erkennen, daß der Randabschnitt 8 nach außen gebogen ist und eine Fläche 17 bildet, die im wesentlichen in der gleichen Ebene wie der Schellenmantel 2 liegt. Diese Ausgestaltung hat den Vorteil, daß der Kraftfluß in Umfangsrichtung nicht so stark gestört wird wie bei einem einfachen radialen Einschnitt in den Randabschnitt 8. Durch die Unterbrechung 16 wird eine Art Scharnier gebildet, in dem der Schellenmantel 2 nach Lösen der Spannschrauben 3 aufgebogen werden kann. Dieses Aufbiegen erleichtert die Herstellung der Rohrschelle 1, insbesondere das Einlegen oder Einführen der Krallenbänder 9. Die Befestigungsabschnitte 12 im Bereich der Gelenkhülsen 4, 5 werden bei geöffnetem Schellenmantel eingeschoben. Danach werden die Bügel 14 am anderen Ende um die Endabschnitte 15 herumgebogen, und die Krallenbänder 9 sind zuverlässig im Schellenmantel 2 fixiert.

Auch bei der Montage oder Demontage der Rohrschelle 1 an bzw. von einem Rohr kann es für den Monteur vorteilhaft sein, wenn er die Rohrschelle 1 aufbiegen kann, um sie um das Rohr herumzulegen oder von diesem zu entfernen.

Die Wirkungsweise der Rohrschelle läßt sich folgendermaßen darstellen:

Wenn die Rohrschelle 1 um ein Rohr oder um zwei Rohrenden herumgelegt worden ist, werden die Spannschrauben 3 angezogen. Dabei verringert sich der lichte Durchmesser des vom Schellenmantel 2 umgebenen Raumes. Die Zähne 10 kommen dabei zunächst in Anlage an und später in Eingriff mit der Umfangsfläche des Rohres bzw. Rohrabschnitts. Wenn die Spannschrauben 3 weiter angezogen werden und die Rohrschelle 1 damit noch stärker gespannt wird, dann können die Zähne 10 radial nach außen ausweichen. Sie müssen dabei, da die Krallenbänder 9 sozusagen um den Eckpunkt des Winkelbereichs 11 herum gekippt werden, auch eine entsprechende Bewegung in Axialrichtung nach innen ausführen, so daß insbesondere bei der Beaufschlagung von Rohrenden die Rohre stärker zueinander hin gedrückt werden. Da die Krallenbänder 9, abgesehen von der Anlage der Längskante 18, die nicht mit Zähnen 10 versehen ist, und der Befestigung der Endabschnitte 12, 15 nicht in Radialrichtung gestützt sind, können die Zähne 10 frei nach außen bewegt werden. Dabei wird zwar die Anpresskraft auf das Rohr erhöht. Andere Teile können jedoch nicht überlastet werden. Insbesondere muß man nicht darauf achten, daß die Rohrschelle 1 nur mit einem vorbestimmten Drehmoment gespannt wird. Man kann sie sozusagen auf Sicht spannen und die Spannung beispielsweise darauf kontrollieren, ob die beiden Schlaufen 6 der Spannbacken mit den Gelenkhülsen 4, 5 auf einen vorbestimmten Abstand oder, bei entsprechend längerem Schellenband, auf Anschlag festgezogen worden sind. Vorzugsweise ist daher die Umfangslänge des Schellenmantels 2 so gewählt, daß seine Umfangsenden aneinander anliegen, wenn die Schelle soweit gespannt ist, daß der Durchmesser des Umkreises der freien Zahnenden kleiner als der, unter Berücksichtigung eines Rohrdurchmesser-Toleranzbereiches, kleinste Nenn-Außendurchmesser der oder des in der Schelle aufzunehmenden Rohre(s) ist.

Hätte man auf der Innenseite der Krallenbänder 9, also zwischen der schrägen, der Innenseite des Schellenmantels 2 zugekehrten Rückseite der Krallenbänder 9 und dem Schellenmantel 2, eine Abstützung, z.B. in Form einer Gummihülse oder eines aus dem Schellenband 2 herausgebogenen Vorsprungs oder dergleichen, dann wäre die radiale Auswärtsbewegung der Zähne behindert, was mit der vorliegenden Erfindung ausgeschlossen werden soll.

Die Befestigung der Krallenbänder 9 an dem Schellenmantel 2 kann auch auf andere Weise erfolgen, beispielsweise dadurch, daß am Krallenband 9 entsprechende Bügel ausgeformt sind, die in Ausnehmungen, Öffnungen oder Bohrungen am Schellenband 2 eingreifen. Man kann auch Bügel vorsehen, die als separate Teile ausgebildet sind und das Krallenband und entsprechende Ausformungen am Schellenmantel 2 umgreifen.

Es ist auch nicht unbedingt notwendig, daß das Schellenband 2 die Randabschnitte 8 aufweist, wenn man die entsprechende Halterung der Krallenbänder 9 am Schellenmantel 2 auch auf andere Weise erreicht werden kann. Eine Möglichkeit wäre, am Krallenband 9 radial vorstehende Vorsprünge anzubringen oder auszubilden, die in entsprechende Ausnehmungen am Schellenmantel 2 eingreifen.

## Patentansprüche

1. Rohrschelle, insbesondere Rohrkupplung, mit einem spannbaren Schellenmantel (2) und mindestens einem radial innerhalb des Schellenmantels (2) angeordneten, zur axialen Mitte des Schellenmantels hin geneigten Krallenband (9), das zwischen sich und der radial inneren Seite des Schellenbandes (2) einen spitzen Winkel (α) begrenzt, an einer Längskante radial nach innen ragende, axial relativ zum Schellenmantel geneigte Zähne (10) aufweist und nur mit der anderen Längskante (18) in Radialrichtung und in Axialrichtung am Schellenmantel (2) direkt abgestützt ist, **dadurch gekennzeichnet, daß** der spitze Winkel (α) frei von einer Verbiegung des Krallenbandes (9) zur radial inneren Seite des Schellenmantels (2) entgegenwirkenden Mitteln ist.

2. Rohrschelle nach Anspruch 1, **dadurch gekennzeichnet, daß** das Krallenband im Bereich der anderen Längskante (18) am Schellenmantel (2) anliegt, wobei der Schellenmantel (2) und das Krallenband (9) eine aneinander angepaßte Anlageform aufweisen, die Druckkräfte in axialer und radialer Richtung aufnimmt.

3. Rohrschelle nach Anspruch 2, **dadurch gekennzeichnet, daß** der Schellenmantel einen radial nach innen umgebogenen Randabschnitt (8) aufweist, der einen Innenwinkel (11) bildet, in dem die andere Längskante (18) des Krallenbandes (9) angeordnet ist.

4. Rohrschelle nach Anspruch 3, **dadurch gekennzeichnet, daß** das Krallenband (9) an seinen Enden mit dem Schellenmantel (2) verbunden ist.

5. Rohrschelle nach Anspruch 4, **dadurch gekennzeichnet, daß** das Krallenband (9) mit dem Schellenmantel (2) formschlüssig verbunden ist.

6. Rohrschelle nach Anspruch 5, **dadurch gekennzeichnet, daß** der Schellenmantel (2) und das Krallenband (9) durch Bügel (13, 14) miteinander verbunden sind, die einstückig mit dem Schellenmantel (2) und formschlüssig mit dem Krallenband (9) oder einstükkig mit dem Krallenband und formschlüssig mit dem Schellenmantel oder formschlüssig mit dem Krallenband und dem Schellenmantel verbunden sind.

7. Rohrschelle nach Anspruch 6, **dadurch gekennzeichnet, daß** an jedem Krallenband (9) ein Bügel (13) mindestens an zwei Seiten des Bügels mit dem Schellenmantel (2) verbunden ist und eine Tasche bildet, in die das Krallenband (9) eingesteckt ist.

8. Rohrschelle nach Anspruch 6, **dadurch gekennzeichnet, daß** der Bügel (14) an seinem einen Ende befestigt und an seinem anderen Ende aufbiegbar ist.

9. Rohrschelle nach Anspruch 7 oder 8, **dadurch gekennzeichnet, daß** das eine Ende des Bügels (13) am Randabschnitt (8) befestigt ist.

10. Rohrschelle nach einem der Ansprüche 6 bis 9, **dadurch gekennzeichnet, daß** das Krallenband (9) an mindestens einem Ende einen Befestigungsabschnitt (12) aufweist, der gegenüber dem Rest des Krallenbandes (9) verdreht ist.

11. Rohrschelle nach Anspruch 10, **dadurch gekennzeichnet, daß** der Befestigungsabschnitt (12) zumindest annähernd parallel zum Schellenmantel (2) angeordnet ist.

12. Rohrschelle nach einem der Ansprüche 3 bis 11, **dadurch gekennzeichnet, daß** der Randabschnitt (8) in Umfangsrichtung mindestens eine Unterbrechung (16) aufweist.

13. Rohrschelle nach Anspruch 12, **dadurch gekennzeichnet, daß** die Unterbrechung (16) dadurch gebildet ist, daß der Randabschnitt (8) über eine vorbestimmte Umfangslänge axial nach außen gebogen ist.

14. Rohrschelle nach Anspruch 12 oder 13, **dadurch gekennzeichnet, daß** die Unterbrechung (16) in Umfangsrichtung außerhalb des Krallenbandes (9) angeordnet ist.

15. Rohrschelle nach einem der Ansprüche 1 bis 14, **dadurch gekennzeichnet, daß** die Umfangslänge des Schellenmantels (2) so gewählt ist, daß seine Umfangsenden aneinander anliegen, wenn die Schelle soweit gespannt ist, daß der Durchmesser des Umkreises der freien Zahnenden kleiner als der, unter Berücksichtigung eines Rohrdurchmesser-Toleranzbereiches, kleinste Nenn-Außendurchmesser der oder des in der Schelle aufzunehmenden Rohre(s) ist.

## Claims

1. A pipe clamp, in particular, a pipe coupling, comprising a tightenable clamp body (2) with at least one spike strip (9) arranged radially inwardly within the clamp body and slanted toward the axial center of the clamp body, the spike strip delimiting an acute angle (α) between it and the radially inner side of the clamp body (2), having teeth (10) at one longitudinal edge, which teeth project radially inwardly and are slanted axially relative to the clamp body (2), and being directly supported with the other longitudinal edge (18) only in the radial direction and in the axial direction on the clamp body (2), **characterized in that** the acute angle (α) is free of means counteracting a bending of the spike strip (9) toward the radially inner side of the clamp body (2).

2. The pipe clamp according to claim 1, **characterized in that** the spike strip (9) rests on the clamp body (2) in the area of the other longitudinal edge (18), wherein the clamp body (2) and the spike strip (9) have matching contact shapes which receive pressure forces in the axial and radial directions.

3. The pipe clamp according to claim 2, **characterized in that** the clamp body has a radially inwardly bent edge portion (8) forming an inner angle (11 ), in which the other longitudinal edge (18) of the spike strip (9) is arranged.

4. The pipe clamp according to claim 3, **characterized in that** the spike strip (9) is connected at its ends to the clamp body (2).

5. The pipe clamp according to claim 4, **characterized in that** the spike strip (9) is positive-lockingly connected with the clamp body (2).

6. The pipe clamp according to claim 5, **characterized in that** the clamp body (2) and the spike strip (9) are connected by hoops (13, 14), wherein the hoops (13, 14) are formed as a unitary part of the clamp body (2) and are positive-lockingly connected to the spike strip (9), or formed as a unitary part of the spike strip and positive-lockingly connected with the clamp body, or positive-lockingly connected with the spike strip and the clamp body.

7. The pipe clamp according to claim 6, **characterized in that** on each one of the spike strips (9) a hoop (13) is connected on at least two sides of the hoop (13) with the clamp body (2) and forms a pocket, into which the spike strip (9) is inserted

8. The pipe clamp according to claim 6, **characterized in that** the hoop (14) is fastened with one end, while it can be bent open at the other end.

9. The pipe clamp according to claim 7 or 8, **characterized in that** one end of the hoop (13) is fastened on the edge portion (8).

10. The pipe clamp according any of the claims 6 to 9, **characterized in that** the spike strip (9) has at least at one end a fastening portion (12) rotated relative to the remainder of the spike strip (9).

11. The pipe clamp according to claim 10, **characterized in that** the fastening portion (12) is arranged at least substantially parallel to the clamp body (2).

12. The pipe clamp according to any of the claims 3 to 11, **characterized in that** the edge portion (8) in the circumferential direction has at least one interruption (16).

13. The pipe clamp according to claim 12, **characterized in that** the interruption (16) is formed such that the edge portion (8) is bent axially outwardly about a predetermined circumferential length.

14. The pipe clamp according to claim 12 or 13, **characterized in that** the interruption (16) in the circumferential direction is arranged outside of the spike strip (9).

15. The pipe clamp according to any of the claims 1 to 14, **characterized in that** the circumferential length of the clamp body (2) is selected such that the opposed circumferential ends of the clamp body rest against one another when the pipe clamp is tightened to such an extent that the diameter of a circle circumscribing the free tooth ends is smaller than the smallest nominal outer diameter of a pipe or pipes to be received in the pipe clamp, when taking into consideration a pipe diameter tolerance range.

## Revendications

1. Collier de serrage, en particulier raccord de tuyaux, comprenant une enveloppe de collier (2) susceptible d'être tendue, et au moins une bande à griffes (9) agencée radialement à l'intérieur de l'enveloppe de collier (2) et inclinée vers le milieu axial de l'enveloppe de collier, ladite bande à griffes:
-- définissant entre elle-même et le côté radialement intérieur de la bande de collier (2) un angle aigu (α),
-- présentant sur un bord longitudinal des dents (10) qui dépassent radialement vers l'intérieur et qui sont inclinées axialement par rapport à l'enveloppe de collier, et
-- étant directement soutenue uniquement par l'autre bord longitudinal (18) en direction radiale et en direction axiale sur l'enveloppe de collier (2),
**caractérisé en ce que** l'angle aigu (α) est dépourvu de moyens s'opposant à une torsion de la bande à griffes (9) vers le côté radialement intérieur de l'enveloppe de collier (2).

2. Collier de serrage selon la revendication 1, **caractérisé en ce que** la bande à griffes s'applique de contre l'enveloppe de collier (2) dans la région de l'autre bord longitudinal (18), et dans lequel l'enveloppe de collier (2) et la bande à griffes (9) présentent des formes de contact adaptées l'une à l'autre, qui encaissent des forces de compression en direction axiale et en direction radiale.

3. Collier de serrage selon la revendication 2, **caractérisé en ce que** l'enveloppe de collier comprend un tronçon de bordure (8) rabattu radialement vers l'intérieur, qui forme un angle intérieur (11) dans lequel est agencé l'autre bord longitudinal (18) de la bande à griffes (9).

4. Collier de serrage selon la revendication 3, **caractérisé en ce que** la bande à griffes (9) est reliée à ses extrémités à l'enveloppe de collier (2).

5. Collier de serrage selon la revendication 4, **caractérisé en ce que** la bande à griffes (9) est reliée à l'enveloppe de collier (2) par coopération de formes.

6. Collier de serrage selon la revendication 5, **caractérisé en ce que** l'enveloppe de collier (2) et la bande à griffes (9) sont reliées l'une à l'autre par des arceaux (13, 14), lesquels sont réalisés d'une seule pièce avec l'enveloppe de collier (2) et reliés par coopération de formes à la bande à griffes (9), ou réalisés d'une seule pièce avec la bande à griffes et reliés par coopération de formes à l'enveloppe de collier, ou encore reliés par coopération de formes à la bande à griffes et à l'enveloppe de collier.

7. Collier de serrage selon la revendication 6, **caractérisé en ce que**, sur chaque bande à griffes (9), un arceau (13) est relié à l'enveloppe de collier (2) sur deux côtés au moins de l'arceau et forme une poche dans laquelle la bande à griffes (9) est enfichée.

8. Collier de serrage selon la revendication 6, **caractérisé en ce que** l'arceau (14) est fixé à l'une de ses extrémités, et susceptible d'être ouvert par flexion à son autre extrémité.

9. Collier de serrage selon l'une ou l'autre des revendications 7 et 8, **caractérisé en ce que** l'une des extrémités de l'arceau (13) est fixée sur le tronçon de bordure (8).

10. Collier de serrage selon l'une des revendications 6 à 9, **caractérisé en ce que** la bande à griffes (9) comprend, à au moins une extrémité, un tronçon de fixation (12) qui est tourné par rapport au reste de la bande à griffes (9).

11. Collier de serrage selon la revendication 10, **caractérisé en ce que** le tronçon de fixation (12) est agencé au moins approximativement parallèlement à l'enveloppe de collier (2).

12. Collier de serrage selon l'une des revendications 3 à 11, **caractérisé en ce que** le tronçon de bordure (8) présente au moins une interruption (16) en direction périphérique.

13. Collier de serrage selon la revendication 12, **caractérisé en ce que** l'interruption (16) est formée **en ce que** le tronçon de bordure (8) est cintré axialement vers l'extérieur sur une certaine longueur périphérique.

14. Collier de serrage selon l'une ou l'autre des revendications 12 et 13, **caractérisé en ce que** l'interruption (16) en direction périphérique est agencée à l'extérieur de la bande à griffes (9).

15. Collier de serrage selon l'une des revendications 1 à 14, **caractérisé en ce que** la longueur du périmètre de l'enveloppe de collier (2) est ainsi choisie que ses extrémités périphériques sont en contact l'une contre l'autre lorsque le collier est tendu dans une mesure telle que le diamètre inscrit dans les extrémités libres des dents est inférieur au plus petit diamètre extérieur nominal, compte tenu d'une plage de tolérances sur le diamètre des tubes, du ou des tube(s) destiné(s) à être reçu(s) dans le collier.
